# FASCICULE DE BREVET EUROPEEN

(11) **EP 3 904 019 B1**
(45) Date de publication et mention de la délivrance du brevet: **19.11.2025**
(21) Numéro de dépôt: 21170301.2
(22) Date de dépôt: 23.04.2021
(51) Int. Cl.: B25J 15/06, B25J 19/00

(54) **TETE DE PREHENSION PAR ASPIRATION A CORPS DE MOUSSE**
SAUGGREIFERKOPF MIT SCHAUMSTOFFKÖRPER
HEAD FOR GRIPPING BY SUCTION WITH FOAM BODY

(30) Priorité: 28.04.2020 FR 2004205
(43) Date de publication de la demande: 03.11.2021
(73) Titulaire: Piab Aktiebolag, 182 12 Danderyd (SE)
(72) Inventeur: JOULIN, Laurent, 92130 ISSY-LES-MOULINEAUX (FR); BOULANT, Pierre, 91150 ORMOY-LA-RIVIERE (FR)
(74) Mandataire: Cabinet Boettcher

(56) Documents cités:
- EP-A1- 0 325 280
- EP-A2- 2 796 263
- DE-A1- 102017 203 939
- DE-A1- 2 629 160
- DE-B3- 10 316 125
- FR-A1- 2 913 414
- JP-A- 2004 055 833
- US-A- 3 720 433

## Description

L'invention concerne le domaine de la préhension par aspiration.

### ARRIERE PLAN DE L'INVENTION

On connaît des systèmes de préhension et de transport de produits tels que des planches, des plaques de tôle ou des matériaux analogues. Ces systèmes comprennent une structure fixée à une platine, ou montée mobile le long de ladite platine, comportant une tête de préhension par aspiration.

Dans les systèmes connus, les têtes de préhension par aspiration comprennent un caisson relié à un dispositif d'aspiration, tel qu'une turbine ou une pompe électrique, ou bien encore un générateur de vide via de l'air comprimé, tel qu'un générateur de vide par effet Venturi.

Le dispositif d'aspiration quel qu'il soit peut être déporté sur la platine néanmoins ceci impose d'assurer un passage de tuyaux de volumes importants entre la tête de préhension et le dispositif d'aspiration déporté. On peut sinon directement intégrer le dispositif d'aspiration dans la tête de préhension mais ceci en augmente la masse.

Par ailleurs on connait les têtes de préhension dite « de préhension surfacique » et les têtes de préhension dite « de préhension ponctuelle ». A la différence des têtes de préhension ponctuelle qui ne comportent chacune qu'une seule alvéole d'aspiration, les têtes de préhension surfacique comportent chacune une pluralité d'alvéoles d'aspiration. De telles alvéoles sont généralement formées par des éléments souples tels que des ventouses ou de la mousse.

En revanche, le caisson de la tête de préhension portant de telles alvéoles est lui bien rigide afin d'éviter un écrasement de la tête de préhension lors de sa mise sous vide. Un tel caisson est par exemple à base d'aluminium, d'acier, de plastique, d'éléments composites (carbone, fibre de verre...) ...

Dès lors, notamment lorsque la tête porte elle-même le dispositif d'aspiration, il n'est pas rare que la tête de préhension présente une masse proche de celle du produit qu'elle est censée soulever ce qui est peu pratique.

Ceci impose notamment à l'utilisateur d'employer un système de préhension avec une capacité plus importante ou bien de se limiter dans la quantité ou le type de produits à soulever.

Des exemples de l'art antérieur pertinent sont divulgué dans les documents EP 2 796 263 A2, DE 26 29 160 A1, DE 10 2017 203939 A1 ou FR 2 913 414 A1.

### OBJET DE L'INVENTION

Un but de l'invention est de proposer une tête de préhension par aspiration de masse moindre.

### RESUME DE L'INVENTION

En vue de la réalisation de ce but, on propose selon l'invention, une tête de préhension par aspiration comprenant au moins un châssis et une semelle destinée à venir reposer contre un produit à soulever, la semelle étant agencée en partie basse du châssis.

Selon l'invention, le châssis comporte un corps en mousse dans lequel est ménagé un chemin d'aspiration entre la semelle et un orifice de sortie de la tête de préhension destiné à être raccordé à un bloc d'aspiration, le corps en mousse formant ainsi seul, sur au moins une partie du chemin, la séparation entre un air aspiré à travers ledit chemin et l'extérieur de la tête de préhension de sorte que l'air aspiré soit directement en contact avec la mousse du corps en mousse.

De la sorte, l'invention permet d'être plus légère que les dispositifs de l'art antérieur grâce au recours à un châssis à corps en mousse formant au moins en partie le chemin d'aspiration d'air.

De façon avantageuse, le corps en mousse assure également une protection externe à l'invention du fait qu'il n'est pas recouvert, ou du moins pas intégralement, par un autre composant. On rend ainsi l'invention non ou alors peu contondante.

Pour toute la présente demande les termes « inférieur », « supérieur » ... doivent être entendus selon la position en service de la tête de préhension lorsque la semelle se trouve sensiblement parallèle à une surface horizontale.

Selon l'invention, la tête comporte au moins un élément de rigidification.

Optionnellement la tête comporte un bloc d'aspiration raccordé à l'orifice de sortie, l'élément de rigidification étant une interface de fixation du bloc d'aspiration au corps en mousse.

Optionnellement la tête comprend un logement ménagé dans le corps en mousse pour la réception de l'interface de fixation, l'interface de fixation ou le logement comprenant une gorge de réception de respectivement une portion du logement ou de l'interface de fixation.

Optionnellement l'élément de rigidification est une plaque ou un insert agencée en partie basse du châssis.

Selon l'invention, l'élément de rigidification (et par exemple la plaque ou l'insert) est agencé au moins en partie à l'intérieur du corps en mousse.

Optionnellement l'élément de rigidification est un cadre.

Optionnellement le cadre est composé de plusieurs pièces distinctes.

Optionnellement le cadre forme un contour fermé.

Optionnellement au moins l'un des éléments de rigidification est une entretoise ou joue le rôle d'une entretoise en étant fixé à chacune de ses extrémités à deux autres éléments de rigidification.

Optionnellement la tête comprend un bloc d'aspiration raccordé à l'orifice de sortie, le bloc d'aspiration étant agencé au moins en partie à l'intérieur du corps en mousse.

Optionnellement la tête est une tête de préhension surfacique.

Optionnellement un bloc d'aspiration et/ou un module d'atténuation sonore est agencé au moins en partie à l'intérieur du corps en mousse.

Optionnellement la semelle est directement fixée, au moins en partie, à une face inférieure du corps en mousse.

Optionnellement le corps en mousse est conformé de sorte que le chemin d'aspiration se divise dans sa partie basse en une pluralité de canaux avec ou sans bille et/ou de trous calibrés débouchant respectivement à l'aplomb de l'une des alvéoles de la semelle.

L'invention concerne également un système de préhension comprenant une structure porteuse et une tête tel que précitées.

D'autres caractéristiques et avantages de l'invention ressortiront à la lecture de la description qui suit de modes de réalisation particuliers non limitatifs de l'invention.

### BREVE DESCRIPTION DES DESSINS

L'invention sera mieux comprise à la lumière de la description qui suit en référence aux figures annexées parmi lesquelles :
- la figure 1 est une vue éclatée d'une tête de préhension par aspiration selon un premier mode de réalisation de l'invention ;
- la figure 2 est une vue en coupe transversale de la tête de préhension représentée à la figure 1 ;
- la figure 3 est une vue éclatée d'une tête de préhension par aspiration selon un deuxième mode de réalisation de l'invention ;
- la figure 4 est une vue en coupe transversale de la tête de préhension représentée à la figure 3 ;
- la figure 5 est une vue éclatée d'une tête de préhension par aspiration selon un troisième mode de réalisation de l'invention ;
- la figure 6 est une vue en coupe transversale de la tête de préhension représentée à la figure 5 ;
- la figure 7 est une vue éclatée d'une tête de préhension par aspiration selon un quatrième mode de réalisation de l'invention ;
- la figure 8 est une vue en coupe transversale de la tête de préhension représentée à la figure 7.

### DESCRIPTION DETAILLEE DE L'INVENTION

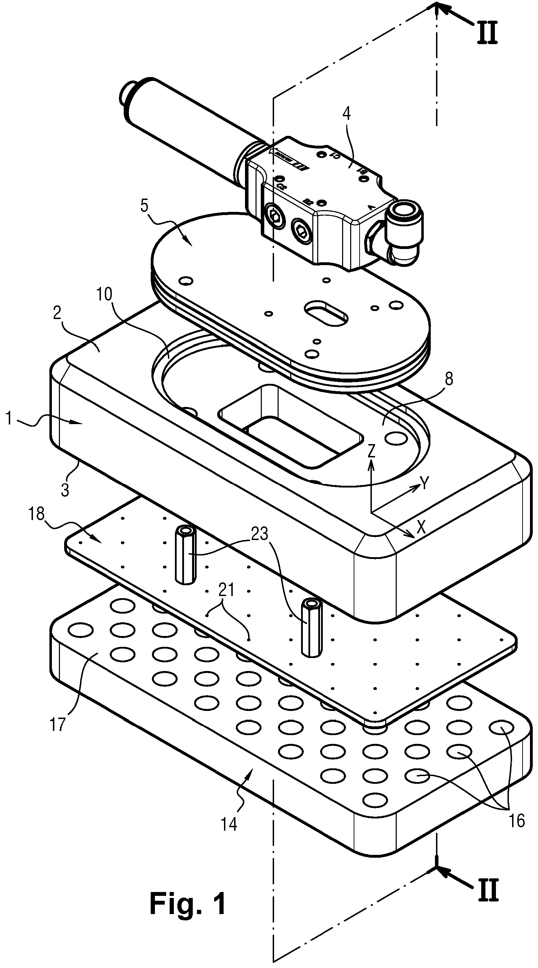

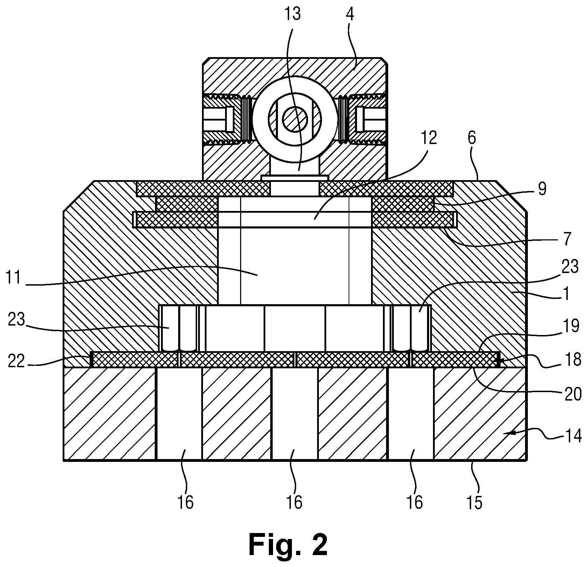

En référence aux figures 1 et 2, la tête de préhension par aspiration selon un premier mode de réalisation comporte un châssis qui est ici constitué intégralement d'un corps en mousse 1.

Le châssis est ainsi non seulement étanche mais également de faible densité. Ceci permet de réduire la masse de la tête de préhension.

Ledit corps 1 présente extérieurement une forme globalement parallélépipédique. En particulier, ledit corps comporte une face supérieure 2 plane s'étendant dans un plan défini par deux directions orthogonales X et Y. A l'opposée, le corps comporte également une face inférieure 3 plane parallèle à la face supérieure.

Dans le cas présent, afin d'être moins dangereux pour un utilisateur, le corps 1 est conformé en un parallélépipède rectangle dont au moins les arrêtes entre chaque couple de deux faces latérales consécutives sont formées par des plans inclinés et/ou des arrondis et dont au moins les arêtes entre chaque face latérale et la face supérieure sont formées par des plans inclinés et/ou des arrondis.

Par ailleurs, la tête de préhension comporte optionnellement un bloc d'aspiration 4. Le bloc d'aspiration 4 est optionnellement un générateur de vide tel qu'un générateur de vide par air comprimé. Par exemple le générateur de vide est un générateur de vide par effet Venturi.

De préférence, la tête de préhension comporte une interface de fixation 5 du bloc d'aspiration 4 au châssis.

L'interface de fixation 5 est par exemple en matière plastique.

L'interface de fixation 5 est préférentiellement globalement conformée en une plaque de sorte à présenter une faible épaisseur et deux faces principales : une face supérieure 6 et une face inférieure 7. Les deux faces 6, 7 sont planes et parallèles entre elles. Les deux faces 6, 7 s'étendent par ailleurs parallèlement à la face supérieure 2 du corps 1. Optionnellement, l'interface de fixation 5 est conformée de sorte à présenter une section de forme oblongue (selon un plan de section parallèle aux deux faces principales).

Dans le cas présent le bloc d'aspiration 4 est fixé à la face supérieure 6 de l'interface de fixation 5 qui est lui-même fixé au châssis de sorte que le bloc d'aspiration 4 soit agencé en partie haute de la tête de préhension.

De préférence, l'interface de fixation 5 est agencée au moins en partie dans le châssis et préférentiellement est agencée dans le châssis de sorte à ne pas en dépasser.

On isole ainsi l'interface de fixation 5 par le corps 1 en mousse ce qui limite un risque de blessure d'un utilisateur par la tête de préhension.

A cet effet, le corps 1 comporte un premier logement 8 de réception de l'interface de fixation 5. Ce premier logement 8 s'étend depuis la face supérieure 2 du corps 1 jusqu'à l'intérieur de celui-ci. Le premier logement 8 est de préférence centré selon la direction X et selon la direction Y dans le corps 1.

De préférence le premier logement 8 est de forme et de dimensions similaires à celles de l'interface de fixation 5 afin d'assurer une bonne étanchéité de l'ensemble. Typiquement, le premier logement 8 a une section transversale (selon un plan de section parallèle au plan défini par les directions X et Y) oblongue de dimensions similaires à celles de l'interface de fixation 5.

Ainsi l'interface de fixation 5 est agencée de sorte que sa face supérieure 6 soit sensiblement à niveau de la face supérieure 2 du corps 1, le reste de l'interface de fixation 5 étant logé dans le corps 1. Seule la face supérieure 6 de l'interface de fixation 5 n'est pas recouverte par la mousse du corps 1.

Dans cette position le bloc d'aspiration 4 repose sur la face supérieure 6 de l'interface de fixation 5 de sorte que sa face inférieure soit à niveau de la face supérieure 2 du corps 1. Le bloc d'aspiration 4 ne pénètre donc pas ou peu dans le corps 1.

Optionnellement, une gorge 9 est ménagée dans la face latérale de l'interface de fixation 5 (soit la face reliant entre elles les deux faces principales 6, 7 de l'interface de fixation 5). Ladite gorge 9 est ici ménagée sur tout le pourtour de ladite face. De préférence, ladite gorge 9 est centrée selon une direction Z (direction orthogonale aux deux directions X et Y) sur ladite face latérale.

De manière correspondante, le premier logement 8 comporte au moins une languette 10 s'étendant sur tout le pourtour d'une face interne du premier logement 8 en vis-à-vis de la face latérale de l'interface de fixation 5.

Ainsi une fois l'interface de fixation 5 agencée dans le premier logement 8, la languette du premier logement 8 vient se loger dans la gorge de l'interface de fixation 5.

Ceci permet de comprimer localement la mousse du corps 1 au niveau de la frontière corps 1/interface de fixation 5 ce qui améliore l'étanchéité de la tête de préhension.

Bien entendu l'air doit pouvoir circuler entre l'entrée du bloc d'aspiration 4 et la face inférieure 3 du corps 1. A cet effet, un chemin d'aspiration 11 est ménagé à travers le corps 1 de sorte à comprendre une portion inférieure débouchant à une première extrémité au niveau de la face inférieure 3 du corps 1 et à une deuxième extrémité dans le fond du premier logement 8, le premier logement 8 formant la portion supérieure du chemin d'aspiration.

Le chemin d'aspiration 11 s'étend rectilignement selon la direction Z en étant centré dans le corps en mousse selon les directions X et Y.

Ledit chemin d'aspiration 11 présente toutefois ici des sections différentes (selon le plan de section parallèle au plan contenant les directions X et Y) à différentes hauteurs considérées dudit chemin avec une section qui se rétrécit à mesure que l'on se rapproche de la face supérieure 2 du corps 1.

De manière correspondante, l'interface de fixation 5 comporte un canal d'aspiration 12 s'étendant entre ses deux faces principales 6, 7 de sorte à déboucher à une première extrémité dans la face inférieure 7 au niveau du fond du premier logement 8 et à une deuxième extrémité dans la face supérieure 6 au niveau de l'entrée du bloc d'aspiration 4. Le canal d'aspiration 12 s'étend rectilignement selon la direction Z. Ledit canal présente également ici des sections différentes (selon le plan de section parallèle au plan contenant les directions X et Y) à différentes hauteurs considérées dudit canal avec une portion inférieure (comprenant la première extrémité) de plus grandes dimensions que la portion supérieure (comprenant la deuxième extrémité). La portion inférieure présente une hauteur (selon la direction Z) plus importante que la deuxième portion. En réalité la portion inférieure est centrée dans l'interface de fixation selon les directions X et Y et présente une section de dimensions et de forme identiques à celles de la section du chemin d'aspiration 11 en regard dans le fond du premier logement 8 afin d'assurer une continuité entre le chemin d'aspiration 11 et le canal d'aspiration 12 à ce niveau. La deuxième portion du canal d'aspiration 12 est en revanche de dimensions moins importantes que la première portion et adaptées à assurer une continuité entre l'entrée 13 du bloc d'aspiration 4 et ledit canal 12.

De préférence on ne vient pas appuyer directement avec la face inférieure du châssis sur un produit à soulever. Ainsi, la tête de préhension comporte une semelle 14 solidarisée au corps 1 et dont la face inférieure 15 est celle destinée à venir directement au contact du produit à saisir. Ladite semelle 14 est préférentiellement en mousse. Il ne faut cependant pas confondre ici ladite semelle 14, qui n'est là que pour faciliter la préhension d'un produit, du corps 1 qui est là pour former le chemin d'aspiration 11 et remplir le rôle de châssis. Le corps 1 doit ainsi assurer une rigidité de la tête de préhension lorsque la semelle 14 à inversement pour but de se déformer sous l'action de l'aspiration pour renforcer l'adhésion du produit à la tête de préhension.

La semelle 14 est ici d'une seule pièce.

La semelle 14 recouvre dans le cas présent toute la face inférieure du corps 1.

La semelle 14 a globalement une forme de parallélépipède. Plus précisément, la semelle 14 est conformée en un parallélépipède rectangle dont au moins les arêtes entre tous les couples de deux faces latérales consécutives sont formées par des plans inclinés et/ou des arrondis.

Typiquement, la tête de préhension est une tête de préhension surfacique. La semelle 14 comporte ainsi une pluralité d'alvéoles 16 (dont une partie seulement est référencée ici) régulièrement réparties dans la semelle 14.

Ceci permet de pouvoir appliquer la tête de préhension à une plus grande variabilité de produits à manipuler.

Chaque alvéole 16 est ici formée d'un trou s'étendant rectilignement parallèle à la direction Z de sorte à déboucher à une première extrémité au niveau de la face supérieure 17 de la semelle 14 et à une deuxième extrémité au niveau de la face inférieure 15 de la semelle 14.

De préférence la semelle 14 n'est pas directement fixée au châssis (ou bien n'est pas entièrement directement fixée au châssis) mais est fixée audit châssis par l'intermédiaire d'une plaque 18. Ladite plaque 18 est ainsi directement fixée au corps 1 par sa face supérieure 19 et directement fixée à la semelle par sa face inférieure 20.

La plaque 18 présente une section rectangulaire (selon un plan de section parallèle au plan contenant les directions X et Y) .

De préférence ladite plaque 18 présente des dimensions inférieures à celles de la face supérieure 17 de la semelle 14 et/ou de la face inférieure 3 du corps 1. Dans ce cas, la semelle 14 est également directement fixée au châssis sur les portions de la face inférieure 3 du corps 1 non recouvertes par la plaque 18. Dans le cas présent, ceci correspondant à une fixation sur tout le pourtour externe de la plaque 18 et donc sur tout le pourtour périphérique de la face inférieure 3 du corps 1. Le chevauchement de la semelle 14 sur à la fois la plaque et le corps 1 permet d'améliorer l'étanchéité de l'ensemble.

La plaque 18 est par exemple à base de plastique.

Bien entendu, la plaque 18 est percée de trous calibrés 21 (dont une partie seulement est référencée ici), chaque trou calibré 21 s'étendant dans le prolongement de l'une des alvéoles 16 de la semelle 14. Les trous calibrés 21 sont d'un diamètre bien moins important que celui des alvéoles 16.

Dans le cas présent, la plaque 18 est agencée au moins en partie dans le châssis et préférentiellement est agencée intégralement à l'intérieur du châssis.

On isole ainsi la plaque 18 de l'extérieur par le corps 1 ce qui limite un risque de blessure d'un utilisateur de la tête de préhension.

A cet effet, le corps 1 comporte un deuxième logement 22 de réception de la plaque 18. Ce deuxième logement 22 s'étend depuis la face inférieure 3 du corps 1 jusqu'à l'intérieur de celui-ci. Le deuxième logement 22 est de préférence centré selon la direction X et selon la direction Y dans le corps 1. De préférence le deuxième logement 22 est de forme et de dimensions similaires à celles de la plaque 18 afin d'assurer une bonne étanchéité de l'ensemble. Typiquement, le deuxième logement 22 a une section transversale (selon un plan de section parallèle au plan défini par les directions X et Y) rectangulaire de dimensions similaires à celles de la plaque.

Ainsi la plaque 18 est agencée de sorte que sa face inférieure 20 soit sensiblement à niveau de la face inférieure 3 du corps 1, le reste de la plaque 18 étant donc logé dans le corps 1.

Dans cette position la semelle 14 repose donc contre la face inférieure 20 de la plaque 18 de sorte que sa face supérieure 17 soit à niveau de la face inférieure 3 du corps 1. La semelle 14 ne pénètre donc pas ou peu dans le corps 1.

Ainsi en service l'aspiration se fait via le bloc d'aspiration 4 à travers les alvéoles 16 puis le chemin d'aspiration 11 (d'abord via la plaque 18 puis directement le chemin d'aspiration 11 puis le canal d'aspiration 12).

De façon avantageuse, le corps 1 permet ainsi la répartition de l'aspiration vers tous les trous calibrés 21 et donc vers toutes les alvéoles 16.

En outre, la plaque 18 permet de rigidifier le corps 1 puisqu'elle est incorporée audit corps 1.

Par ailleurs, lorsque le produit à manipuler est de plus petites dimensions que la semelle 14, tous les alvéoles 16 ne sont pas nécessairement recouvertes par le produit. La plaque 18 permet alors de limiter les fuites au niveau desdites alvéoles 16 non recouverte.

Préférentiellement, la tête de préhension comporte au moins une entretoise 23 agencée dans le corps en mousse pour en limiter la déformation. On rappelle qu'une entretoise 23 est une pièce rigide qui en relie deux autres et les maintient dans un écartement fixe.

Dans le cas présent, l'entretoise 23 de la tête de préhension est un tube et par exemple un tube métallique.

De préférence, ladite entretoise 23 s'étend rectilignement parallèlement à la direction Z de sorte à limiter une déformation verticale du corps 1.

Par exemple le corps 1 incorpore entre 1 et 10 entretoises 23, optionnellement entre 2 et 8 entretoises 23, optionnellement entre 3 et 6 entretoises 23. Dans le cas présent, le corps 1 incorpore quatre entretoises 23.

Chaque entretoise 23 s'étend entre l'interface de fixation 5 et la plaque 18. Plus précisément ici, chaque entretoise 23 est fixée à une première extrémité à la face inférieure 7 de l'interface de fixation 5 et à une deuxième extrémité opposée à la face supérieure 19 de la plaque 18.

Les entretoises 23 sont régulièrement réparties dans le corps 1. Par exemple les entretoises 23 sont agencées aux quatre coins du chemin d'aspiration 11 au niveau de sa section la plus importante.

Des perçages sont ménagés dans le corps 1 pour le passage des entretoises 23 à travers ledit corps 1.

Ainsi les entretoises 23 passant à travers le corps 1 permettent aussi de réduire les déformations latérales dudit corps 1.

En outre, ces entretoises 23 limitent un risque d'arrachement d'une ou plusieurs couches de la tête de préhension en assurant une fixation de l'interface de fixation 5 à la plaque 18.

On a ainsi décrit une tête de préhension simple de structure dont le châssis est entièrement en mousse.

De la sorte, le chemin d'aspiration 11 à travers le châssis est uniquement défini par ledit corps 1 et n'est donc séparé de l'extérieur que par ledit corps 1. L'air est en outre aspiré directement à travers la mousse du corps 1 pour la partie du chemin d'aspiration 11 s'étendant entre la plaque 18 et l'interface de fixation 5 c'est-à-dire que seule la mousse du corps 1 sépare l'air aspiré à travers la tête de l'air extérieur à la tête (pour la portion basse du chemin d'aspiration 11 et sa portion haute, l'air est en effet aspiré dans ledit chemin d'aspiration 11 à travers respectivement la plaque 18 et l'interface de fixation 5).

La tête de préhension ainsi décrite s'avère donc de masse réduite par rapport aux dispositifs de l'art antérieur. Avantageusement une telle tête de préhension permet de limiter un risque de blessure de l'utilisateur grâce au corps en mousse.

Ainsi, l'utilisation d'une mousse comme élément structurant de la tête de préhension permet d'obtenir une tête de préhension compacte tout en protégeant l'utilisateur en cas de collision.

Dans le mode de réalisation décrit, les entretoises 23, la plaque 18 et l'interface de fixation 5 permettent de rigidifier la tête de préhension tout en étant internes à ladite tête. En effet, ces différents éléments de rigidification permettent ainsi de limiter la déformation du corps 1 tout en permettant de conserver une tête de préhension légère et peu dangereuse en cas de collision.

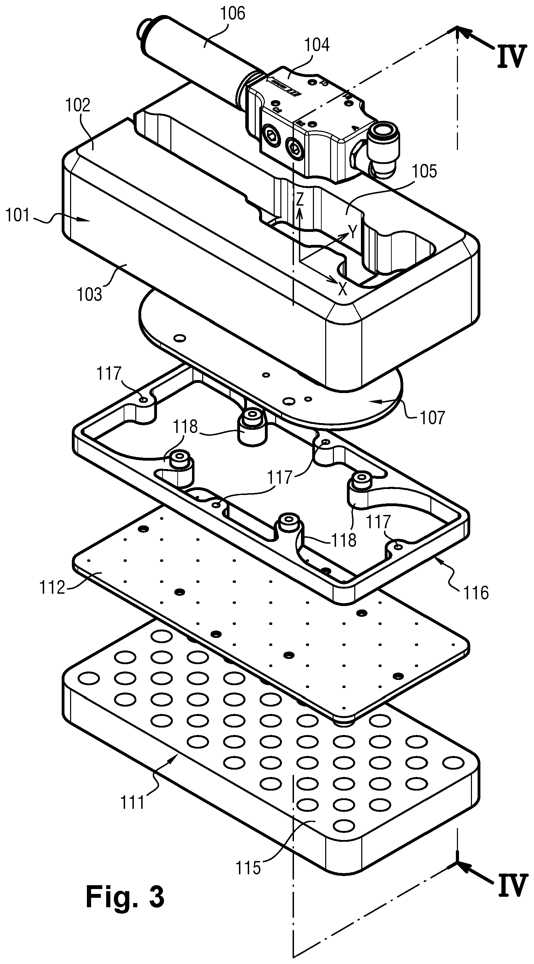

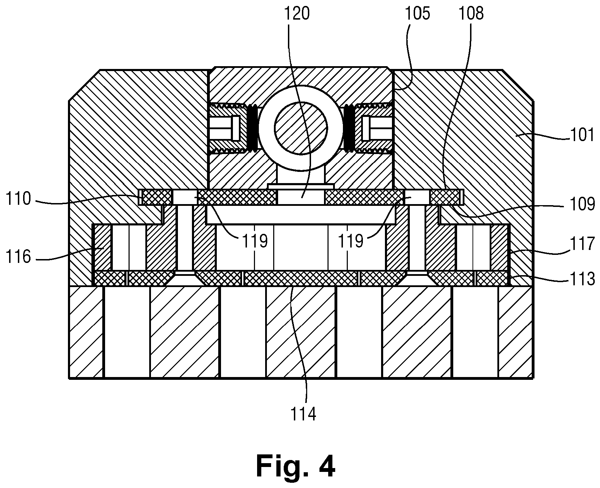

En référence aux figures 3 et 4, la tête de préhension par aspiration selon un deuxième mode de réalisation comporte un châssis qui est ici constitué intégralement d'un corps 101.

Le châssis est ainsi non seulement étanche mais également de faible densité. Ceci permet de réduire la masse de la tête de préhension.

Ledit corps 101 présente extérieurement une forme globalement parallélépipédique. En particulier, ledit corps 101 comporte une face supérieure 102 plane s'étendant dans un plan défini par deux directions orthogonales X et Y. A l'opposée, le corps 101 comporte également une face inférieure 103 plane parallèle à la face supérieure.

Dans le cas présent, afin d'être moins dangereux pour un utilisateur, le corps 101 est conformé en un parallélépipède rectangle dont au moins les arrêtes entre chaque couple de deux faces latérales consécutives sont formées par des plans inclinés et/ou des arrondis et dont au moins les arêtes entre chaque face latérale et la face supérieure sont formées par des plans inclinés et/ou des arrondis.

Par ailleurs, la tête de préhension comporte un bloc d'aspiration 104. Le bloc d'aspiration 104 est optionnellement un générateur de vide tel qu'un générateur de vide par air comprimé. Par exemple le générateur de vide est un générateur de vide par effet Venturi.

De préférence, le bloc d'aspiration 104 est agencé au moins en partie dans le châssis et préférentiellement est agencé dans le châssis de sorte à ne pas en dépasser.

On isole ainsi le bloc d'aspiration 104 de l'extérieur par le corps 101 ce qui limite un risque de blessure d'un utilisateur de la tête de préhension.

A cet effet, le corps 101 comporte un premier logement 105 de réception du bloc d'aspiration 104. Ce premier logement 105 s'étend depuis la face supérieure 102 du corps 101 jusqu'à l'intérieur de celui-ci. Le premier logement 105 est de préférence centré selon la direction X et selon la direction Y dans le corps en mousse.

De préférence le premier logement 105 est de forme et de dimensions similaires à celui du bloc d'aspiration 104 afin d'assurer une bonne étanchéité de l'ensemble.

Ainsi le bloc d'aspiration 104 est agencé de sorte que sa face supérieure soit sensiblement à niveau de la face supérieure 102 du corps 101, le reste du bloc d'aspiration 104 étant logé dans le corps 101. Seule la face supérieure du bloc d'aspiration 104 n'est pas recouverte par la mousse du corps 101.

Optionnellement, un module d'atténuation sonore 106 du bloc d'aspiration 104, de type silencieux, est également reçu dans le premier logement 105.

De préférence, la tête de préhension comporte une interface de fixation 107 du bloc d'aspiration 104 au châssis.

L'interface de fixation 107 est par exemple en matière plastique.

L'interface de fixation 107 est préférentiellement globalement conformée en une plaque de sorte à présenter une faible épaisseur et deux faces principales : une face supérieure 108 et une face inférieure 109. Les deux faces 108, 109 sont planes et parallèles entre elles. Les deux faces 108, 109 s'étendent par ailleurs parallèlement à la face supérieure 102 du corps 101. Optionnellement, l'interface de fixation 107 est conformée de sorte à présenter une section de forme oblongue (selon un plan de section parallèle aux deux faces principales 108, 109).

Dans le cas présent le bloc d'aspiration 104 est fixé à la face supérieure 108 de l'interface de fixation 107 qui est lui-même fixé au châssis de sorte que le bloc d'aspiration 104 soit agencé en partie haute de la tête de préhension.

De préférence, l'interface de fixation 107 est agencée au moins en partie dans le châssis et préférentiellement est agencée dans le châssis de sorte à ne pas en dépasser. L'interface de fixation 107 est en réalité ici intégralement logée dans le corps 101.

On isole ainsi l'interface de fixation 107 par le corps 101 ce qui limite un risque de blessure d'un utilisateur par la tête de préhension.

A cet effet, le corps en mousse 101 comporte un deuxième logement de réception 110 de l'interface de fixation 107. Ce deuxième logement 110 s'étend dans le prolongement du premier logement 105 vers l'intérieur du corps 101. Le deuxième logement 110 est de préférence centré selon la direction X et selon la direction Y dans le corps 101.

De préférence le deuxième logement 110 est de forme et de dimensions similaires à celles de l'interface de fixation 107 afin d'assurer une bonne étanchéité de l'ensemble. Typiquement, le deuxième logement 110 a une section transversale (selon un plan de section parallèle au plan défini par les directions X et Y) oblongue de dimensions similaires à celles de l'interface de fixation 107.

Préférentiellement, le deuxième logement 110 forme à son extrémité haute un épaulement avec le premier logement 105 et comporte à son extrémité basse un fond fermant partiellement ledit deuxième logement 110. De la sorte, le deuxième logement 110 forme une gorge de réception de l'interface de fixation 107.

Ceci permet de rigidifier le corps 101 mais également d'assurer une étanchéité de l'ensemble.

De préférence, la tête de préhension comporte également une semelle 111 et une plaque 112 pour lesquelles la description faite pour le premier mode de réalisation est également applicable au deuxième mode de réalisation.

A cet effet, le corps 101 comporte un troisième logement 113 de réception de la plaque 112. Ce troisième logement 113 s'étend depuis la face inférieure 103 du corps 101 jusqu'à l'intérieur de celui-ci. Le troisième logement 113 est de préférence centré selon la direction X et selon la direction Y dans le corps 101. De préférence le troisième logement 113 est de forme et de dimensions similaires à celles de la plaque 112 afin d'assurer une bonne étanchéité de l'ensemble. Typiquement, le troisième logement 113 a une section transversale (selon un plan de section parallèle au plan défini par les directions X et Y) rectangulaire de dimensions similaires à celles de la plaque 112.

Ainsi la plaque 112 est agencée de sorte que sa face inférieure 114 soit sensiblement à niveau de la face inférieure 103 du corps 101, le reste de la plaque 112 étant donc logé dans le corps 101.

Dans cette position la semelle 111 repose donc contre la face inférieure 114 de la plaque 112 de sorte que sa face supérieure 115 soit à niveau de la face inférieure 103 du corps 101. La semelle 111 ne pénètre donc pas ou peu dans le corps 101.

Préférentiellement, la tête de préhension comporte au moins un cadre 116 agencé dans le corps 101 pour en limiter la déformation.

A cet effet, le corps 101 comporte un quatrième logement 117 de réception de la plaque 112. Ce quatrième logement 117 s'étend dans le corps 101 de sorte à raccorder le deuxième logement 110 au troisième logement 113. Le quatrième logement 117 est de préférence centré selon la direction X et selon la direction Y dans le corps 101. De préférence le quatrième logement 117 est de forme et de dimensions similaires à celles du cadre 116 afin d'assurer une bonne étanchéité de l'ensemble.

Dans le cas présent, le cadre 116 est un cadre en matière plastique.

Le cadre 116 présente par ailleurs une hauteur (selon la direction Z) plus importante que celle de la plaque 112 ou que celle de l'interface de fixation 107.

Le cadre 116 permet ainsi de réduire les déformations verticales du corps 101.

Le cadre 116 n'est pas plein et est ainsi évidé en son centre. Ceci permet d'en réduire la masse et bien entendu de laisser l'air passer entre les trous calibrés de la plaque 112 et l'interface de fixation 107.

Optionnellement, si l'on prend une section du cadre 116 (selon un plan de section parallèle au plan contenant les directions X et Y), ledit cadre 116 présente un contour externe d'une forme donnée et un contour interne d'une forme identique ou similaire de dimensions légèrement réduites.

Le cadre 116 est ici conformé de sorte que son contour externe soit de forme et de dimensions similaires ou identiques à celles du contour externe de la plaque 112. Dans le cas présent, le cadre 116 présente donc un contour externe rectangulaire à coins arrondis de dimensions identiques à celles du contour externe de la plaque 112.

Par ailleurs, le cadre 116 est ici agencé de sorte à s'étendre dans le prolongement de la plaque 112. Ainsi chaque face latérale du cadre 116 s'étend dans le prolongement d'une des faces latérales de la plaque 112 de sorte que le cadre 116 forme un rebord supérieur à ladite plaque 112.

Du fait qu'il comporte quatre faces latérales formant montants verticaux et permettant au cadre 116 de suivre le contour externe du corps 101, le cadre 116 permet ainsi de réduire les déformations verticales du corps 101 mais également ses déformations latérales.

Optionnellement, le cadre 116 est fixé au châssis et/ou à un autre élément de la tête de préhension.

Dans le cas présent, le cadre 116 est fixé à la plaque 112. Par exemple, le cadre 116 comporte au moins une extension 117 s'étendant à partir du contour interne du cadre 116 vers l'intérieur de celui-ci afin d'assurer le passage d'au moins un élément de fixation (de type vis ou boulon) à travers elle, élément de fixation assurant la solidarisation du cadre 116 à la plaque 112. Par exemple l'extension 117 s'étend à partir de l'une des quatre faces du contour interne du cadre 116 en direction de l'intérieur du cadre 116. Par exemple l'extension 117 est d'une même hauteur (selon la direction Z) que le reste du cadre 116. Dans le cas présent, le cadre 116 comporte quatre extensions 117, identiques entre elles, chaque extension 117 s'étendant du centre de l'une des quatre faces du contour interne du cadre 116 en direction de l'intérieur du cadre 116.

Par ailleurs, le cadre 116 comporte au moins un bras 118 s'étendant à partir du contour interne du cadre 116 vers l'intérieur de celui-ci. Par exemple le bras 118 s'étend à partir de l'une des quatre faces du contour interne du cadre 116, entre deux extensions 117, en direction de l'intérieur du cadre 116.

Par exemple le cadre 116 comprend entre 1 et 10 bras, optionnellement entre 2 et 8 bras, optionnellement entre 3 et 6 bras. Dans le cas présent, le cadre 116 incorpore quatre bras 118.

Dans le cas présent, les quatre bras 118 sont identiques entre eux : deux bras 118 s'étendent à partir de la face longitudinale du contour interne du cadre 116 de part et d'autre de l'extension 117 de ladite face ; et les deux autres bras 118 s'étendent à partir de la face longitudinale du contour interne du cadre 116 qui lui est opposée de part et d'autre de l'extension 117 associée.

Par ailleurs, chaque bras 118 est prolongé à chacune de ses extrémités (selon la direction Z) par un plot 119 de sorte que chaque bras associé à ses deux plots 119 forme une entretoise qui est donc agencée dans le corps 101 pour en limiter la déformation notamment verticale. On rappelle qu'une entretoise est une pièce rigide qui en relie deux autres et les maintient dans un écartement fixe.

De préférence, ladite entretoise s'étend rectilignement parallèlement à la direction Z de sorte à limiter une déformation verticale du corps 101.

Chaque entretoise s'étend entre l'interface de fixation 107 et la plaque 112. Plus précisément ici, chaque entretoise est fixée à une première extrémité à la face inférieure 109 de l'interface de fixation 107 (par un premier plot 119) et à une deuxième extrémité opposée à la face supérieure de la plaque 112 (par un deuxième plot 119).

Ainsi, le cadre 116 en lui-même présente une hauteur moins importante que la distance séparant l'interface de fixation 107 de la plaque 112. En revanche ses bras 118 présentent eux une hauteur identique à la distance séparant l'interface de fixation 107 de la plaque 112 si l'on prend en compte leurs plots 119.

De préférence, les plots 119 sont d'une seule pièce avec le bras 118 associé.

Optionnellement, au moins l'un des bras 118 et/ou l'une des extensions 117 est d'une pièce avec le reste du cadre. Les entretoises sont régulièrement réparties dans le corps 101. On retient que les entretoises ne s'étendent toutefois pas sur tout le pourtour du cadre mais seulement au niveau de deux faces longitudinales de manière ponctuelle.

Ainsi les entretoises passant à travers le corps 101 permettent aussi de réduire les déformations latérales dudit corps 101.

En outre, ces entretoises limitent un risque d'arrachement d'une ou plusieurs couches de la tête de préhension en assurant une fixation de l'interface de fixation 107 à la plaque 112.

Bien entendu l'air doit pouvoir circuler entre l'entrée du bloc d'aspiration 104 et la face inférieure 103 du corps 101. A cet effet, un chemin d'aspiration est ménagé à travers le corps 101 de sorte à déboucher à une première extrémité au niveau de la face inférieure 103 du corps 101 et à une deuxième extrémité dans le fond du premier logement 105.

Le chemin d'aspiration s'étend rectilignement selon la direction Z en étant centré dans le corps 101 selon les directions X et Y.

Dans le cas présent, ce chemin d'aspiration est défini par la succession du deuxième logement 110, du quatrième logement 117 et du troisième logement 113.

Ledit chemin d'aspiration présente donc ici des sections différentes (selon le plan de section parallèle au plan contenant les directions X et Y) à différentes hauteurs considérées dudit chemin avec une section qui se rétrécit à mesure que l'on se rapproche de la face supérieure 102 du corps 101.

De manière correspondante, l'interface de fixation 107 comporte un trou d'aspiration 120 s'étendant ainsi entre les deux faces principales 108, 109 de l'interface de fixation 107 de sorte à déboucher à une première extrémité dans la face inférieure 109 au niveau de la partie évidée du cadre 116 et à une deuxième extrémité dans la face supérieure 108 au niveau de l'entrée du bloc d'aspiration 104.

On a ainsi décrit une tête de préhension simple de structure dont le châssis est entièrement en mousse.

De la sorte, le chemin d'aspiration à travers le châssis est uniquement défini par ledit corps 101 et n'est donc séparé de l'extérieur que par ledit corps 101. L'air est en outre aspiré directement à travers la mousse du corps 101 pour la partie du chemin d'aspiration s'étendant entre la face supérieure du cadre 116 et l'interface de fixation 107 c'est-à-dire que seule la mousse du corps 101 sépare alors l'air aspiré à travers la tête de l'air extérieur à la tête (pour la portion basse de la tête l'air est en effet aspiré à travers la plaque 112 puis le cadre 116 et pour la portion haute l'air est en effet aspiré à travers l'interface de fixation 107).

La tête de préhension ainsi décrite s'avère donc de masse réduite par rapport aux dispositifs de l'art antérieur. Avantageusement une telle tête de préhension permet de limiter un risque de blessure de l'utilisateur grâce au corps en mousse.

Ainsi, l'utilisation d'une mousse comme élément structurant de la tête de préhension permet d'obtenir une tête de préhension compacte tout en protégeant l'utilisateur en cas de collision.

Dans le mode de réalisation décrit, les entretoises, le cadre 116, la plaque 112 et l'interface de fixation 107 permettent de rigidifier la tête de préhension tout en étant internes à ladite tête. En effet, ces différents éléments permettent ainsi de limiter la déformation du corps 101 tout en permettant de conserver une tête de préhension légère et peu dangereuse en cas de collision.

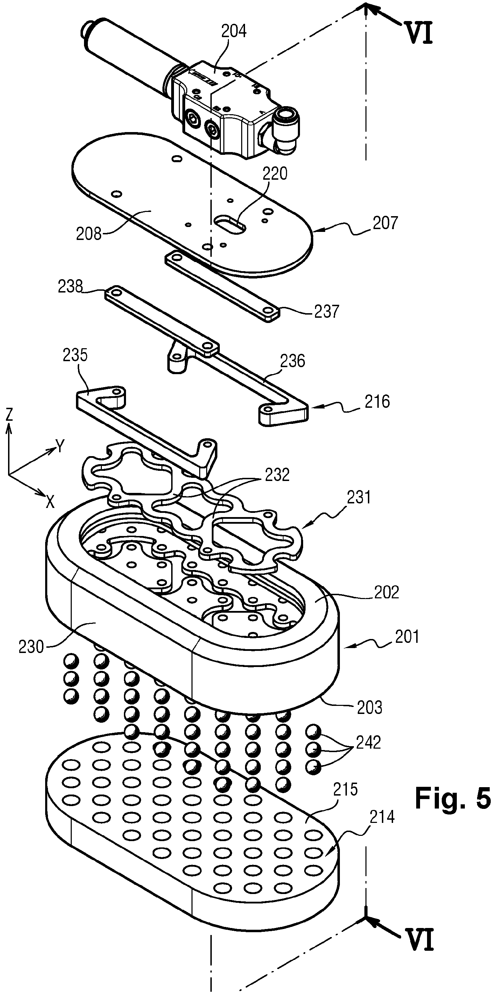

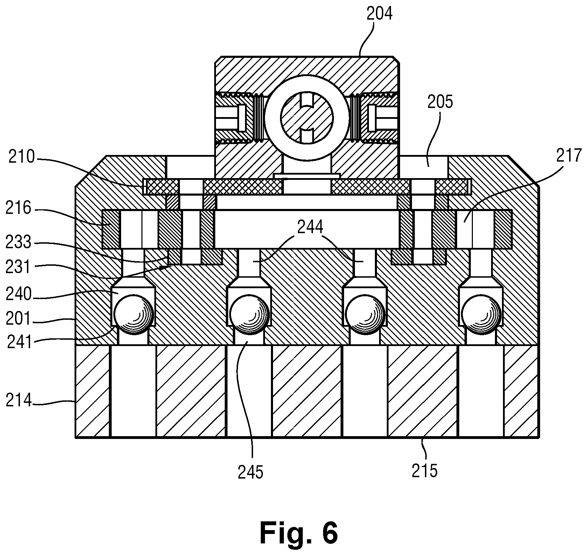

En référence aux figures 5 et 6, la tête de préhension par aspiration selon un troisième mode de réalisation comporte un châssis qui est ici constitué intégralement d'un corps 201.

Le châssis est ainsi non seulement étanche mais également de faible densité. Ceci permet de réduire la masse de la tête de préhension.

Ledit corps 201 présente extérieurement une forme globalement oblongue. En particulier, ledit corps 201 comporte une face supérieure 202 plane s'étendant dans un plan défini par deux directions orthogonales X et Y. A l'opposée, le corps 201 comporte également une face inférieure 203 plane parallèle à la face supérieure 202, les deux faces inférieure et supérieure étant reliées par une face latérale 230 de section oblongue.

La forme oblongue du corps 201 assure une meilleure répartition des contraintes dans le châssis et limite ainsi une déformation dudit châssis en particulier au niveau deux extrémités longitudinales arrondies du corps 201.

Dans le cas présent, afin d'être moins dangereux pour un utilisateur, le corps 201 est conformé de sorte qu'au moins l'arête entre la face latérale 230 et la face supérieure 202 soit formée par un plan incliné et/ou un arrondi.

Par ailleurs, la tête de préhension comporte un bloc d'aspiration 204. Le bloc d'aspiration 204 est optionnellement un générateur de vide tel qu'un générateur de vide par air comprimé. Par exemple le générateur de vide est un générateur de vide par effet Venturi.

De préférence, le bloc d'aspiration 204 est agencé en partie dans le châssis.

On isole ainsi partiellement le bloc d'aspiration 204 de l'extérieur par le corps 201 ce qui limite un risque de blessure d'un utilisateur de la tête de préhension.

A cet effet, le corps 201 comporte un premier logement 205 de réception du bloc d'aspiration 204. Ce premier logement 205 s'étend depuis la face supérieure 202 du corps 201 jusqu'à l'intérieur de celui-ci. Le premier logement 205 est de préférence centré selon la direction X et selon la direction Y dans le corps en mousse 201.

Ainsi le bloc d'aspiration 204 est agencé de sorte que seule sa portion inférieure soit logée dans le corps 201.

De préférence, la tête de préhension comporte une interface de fixation 207 du bloc d'aspiration 204 au châssis. Ladite interface de fixation 207 est ici identique à celle du deuxième mode de réalisation.

Comme dans le deuxième mode de réalisation, le bloc d'aspiration 204 est fixé à la face supérieure 208 de l'interface de fixation 207 qui est lui-même fixé au châssis de sorte que le bloc d'aspiration 204 soit agencé en partie haute de la tête de préhension.

De préférence, l'interface de fixation 207 est agencée au moins en partie dans le châssis et préférentiellement est agencée dans le châssis de sorte à ne pas en dépasser. L'interface de fixation 207 est en réalité ici intégralement logée dans le corps 201.

On isole ainsi l'interface de fixation 207 par le corps 201 ce qui limite un risque de blessure d'un utilisateur par la tête de préhension.

A cet effet, le corps en mousse 201 comporte un deuxième logement de réception 210 de l'interface de fixation 207. Ce deuxième logement 210 s'étend dans le prolongement du premier logement 205 vers l'intérieur du corps 201. Le deuxième logement 210 est de préférence centré selon la direction X et selon la direction Y dans le corps 201.

De préférence le deuxième logement 210 est de forme et de dimensions similaires à celles de l'interface de fixation 207 afin d'assurer une bonne étanchéité de l'ensemble. Typiquement, le deuxième logement 210 a une section transversale (selon un plan de section parallèle au plan défini par les directions X et Y) oblongue de dimensions similaires à celles de l'interface de fixation 207.

Préférentiellement, le deuxième logement 210 forme à son extrémité haute un épaulement avec le premier logement 205 et comporte à son extrémité basse un fond fermant partiellement ledit deuxième logement 210. De la sorte, le deuxième logement 210 forme une gorge de réception de l'interface de fixation 207.

Ceci permet de rigidifier le corps 201 mais également d'assurer une étanchéité de l'ensemble.

Par ailleurs la tête de préhension comporte une semelle 214 solidarisée au corps 201 et dont la face inférieure 215 est celle destinée à venir directement au contact du produit à saisir.

La semelle 214 a globalement une section identique à celle du corps 201 et présente donc une section oblongue identique à celle du corps.

Mis à part cette forme oblongue, la semelle 214 est identique à ceux qui a été dit pour le deuxième mode de réalisation.

Préférentiellement, la tête de préhension comporte au moins un insert 231 permettant de rigidifier le corps 201.

L'insert 231 présente une section (selon un plan de section parallèle au plan contenant les axes X et Y) de contour externe fermé et globalement rectangulaire.

L'insert 231 n'est de préférence pas plein et est ainsi évidé en son centre. Ceci permet d'en réduire la masse.

Préférentiellement l'insert 231 présente toutefois au moins une barrette de liaison 232 entre ses deux côtés longitudinaux. L'insert 231 comporte entre 1 et 4 barrettes et dans le cas présent 2 barrettes 232.

L'insert 231 est par exemple à base de plastique.

Dans le cas présent, l'insert 231 est agencée au moins en partie dans le châssis et préférentiellement est agencée intégralement à l'intérieur du châssis.

A cet effet, le corps 201 comporte un troisième logement 233 de réception de l'insert 231. Ce troisième logement est entièrement ménagé à l'intérieur du corps 201. Le troisième logement 233 est de préférence centré selon la direction X et selon la direction Y dans le corps 201. De préférence le troisième logement 233 est de forme et de dimensions similaires à celles de l'insert 231 afin d'assurer une bonne étanchéité de l'ensemble. Typiquement, le troisième logement 233 a une section transversale (selon un plan de section parallèle au plan défini par les directions X et Y) de dimensions et de forme identiques à celles de l'insert 231.

De préférence, la tête de préhension comporte également un cadre 216 agencé dans le corps 201 pour en limiter la déformation.

A cet effet, le corps 201 comporte un quatrième logement 217 de réception du cadre 216. Ce quatrième logement 217 s'étend dans le corps 201 de manière à relier le troisième logement 233 au deuxième logement 210. Le quatrième logement 217 est de préférence centré selon la direction X et selon la direction Y dans le corps 201.

Dans le cas présent, le cadre 216 est un cadre en matière plastique.

Le cadre 216 présente par ailleurs une hauteur (selon la direction Z) plus importante que celle de l'insert 231 ou que celle de l'interface de fixation 207.

Le cadre 216 permet ainsi de réduire les déformations verticales du corps 201.

Dans le cas présent le cadre 216 est composé d'au moins deux pièces et ici est composé de strictement deux pièces distinctes 235, 236 non solidarisés directement entre eux.

Par exemple chaque pièce 235, 236 présente une barre centrale prolongée à chacune de ses extrémités par deux extensions. Les deux extensions s'étendent sensiblement en direction l'une de l'autre et du centre de la pièce considérée.

Ainsi, si l'on prend une section de chaque pièce (selon un plan de section parallèle au plan contenant les directions X et Y), ladite pièce présente globalement une forme de U dont les branches sont inclinées vers l'intérieur du U. Bien entendu cette forme n'est pas limitative et les branches pourront être à angles droits.

Les extensions sont toutefois d'une longueur inférieure à la barre associées.

Chaque pièce 235, 236 présente la même hauteur entre les extensions et les barres.

Chaque pièce 235, 236 est agencée dans le corps 201 de sorte que les deux barres s'étendent sensiblement parallèlement entre elles et les extensions de l'une des pièces s'étendent en direction de l'autre des pièces. Les extensions s'étendent donc vers le centre du corps 201.

Dans le cas présent, les pièces 235, 236 sont agencées de sorte que les deux barres s'étendent parallèlement à l'un des côtés longitudinaux du corps 201.

Ceci permet de limiter les déformations sur les côtés du corps 201.

Par ailleurs les pièces 235, 236 sont en contact avec l'insert 231.

Optionnellement, chaque pièce 235, 236 est fixée de manière indépendante au châssis et/ou à un autre élément de la tête de préhension. Dans le cas présent, chaque pièce 235, 236 est fixée à l'insert 231.

Par exemple, chaque pièce 235, 236 est fixée à l'insert 231 au niveau des extrémités libres de chacune de ses extensions.

En outre, la tête de préhension comporte au moins une cale associée au cadre 216. Dans le cas présent, la tête de préhension comporte une cale associée à chaque pièce du cadre 216.

Les cales 237, 238 sont ici conformées de sorte à permettre de combler l'espace entre les pièces 235, 236 et l'interface de fixation 207. Les cales sont des pièces indépendantes qui ne sont pas solidarisées directement entre elles. Les cales 237, 238 sont ici chacune conformée en une barrette rectiligne.

Les cales 237, 238 sont agencées de sorte à s'étendre parallèlement entre elles. Les cales 237, 238 sont en outre agencées de sorte à s'étendre parallèlement aux barres des pièces 235, 236.

Typiquement chaque cale 237, 238 présente une longueur sensiblement identique à la distance séparant les extrémités libres des deux extensions de la pièce à laquelle la cale est associée.

Les cales 237, 238 sont ici fixées d'une part à l'interface de fixation 207 et d'autre part au cadre 216. Plus particulièrement ici, les cales 237, 238 sont fixées au niveau de leurs extrémités libres à la face inférieure de l'interface de fixation 207 d'une part et aux extrémités libres des extensions de la pièce à laquelle la cale considérée est associée.

Les cales 237, 238 sont par exemple en matière plastique.

Ainsi, l'ensemble formé du cadre 216 et des cales 237, 238 forme une entretoise qui est donc agencée dans le corps 201 pour en limiter la déformation notamment verticale. On rappelle qu'une entretoise est une pièce rigide qui en relie deux autres et les maintient dans un écartement fixe.

De préférence, ladite entretoise s'étend rectilignement parallèlement à la direction Z de sorte à limiter une déformation verticale du corps 201.

Chaque entretoise s'étend entre l'interface de fixation 207 et l'insert 231. Plus précisément ici, chaque entretoise est fixée à une première extrémité à la face inférieure de l'interface de fixation 207 (par les cales 237, 238) et à une deuxième extrémité opposée à la face supérieure de l'insert 231 (par le cadre 216).

Ainsi, le cadre 216 en lui-même présente une hauteur moins importante que la distance séparant l'interface de fixation 207 de l'insert 231.

Les entretoises sont régulièrement réparties dans le corps 201. On retient que les entretoises ne s'étendent toutefois pas sur toute la périphérie interne du corps 201 mais seulement le long de ses deux faces longitudinales.

Ainsi les entretoises passant à travers le corps 201 permettent aussi de réduire les déformations latérales dudit corps 201.

En outre, ces entretoises limitent un risque d'arrachement d'une ou plusieurs couches de la tête de préhension en assurant une fixation de l'interface de fixation 207 à l'insert 231.

Bien entendu l'air doit pouvoir circuler entre l'entrée du bloc d'aspiration 204 et la face inférieure 203 du corps 201.

A cet effet, la portion inférieure du corps 201 comporte une pluralité de chambres 240 (dont une seule est référencée ici) ménagées dans le corps 201 comprenant un siège 241 recevant une bille 242 pour former conjointement des clapets. En outre des premiers canaux 244 sont également ménagés dans le corps 201 de sorte à déboucher à une première extrémité dans le fond du quatrième logement 217 et à sa deuxième extrémité en partie supérieure de l'une des chambres 240 au-dessus du clapet. De plus, des deuxièmes canaux 245 sont également ménagés dans le corps 201 de sorte à déboucher à une première extrémité en partie basse de la chambre 240 sous le clapet et à sa deuxième extrémité dans l'une des alvéoles de la semelle 214. Les différentes chambres 240 sont identiques entre elles et/ou les différentes billes 242 sont identiques entre elles et/ou les différents premiers canaux 244 sont identiques entre eux et/ou les différents deuxièmes canaux 245 sont identiques entre eux. Les différents canaux 244, 245 ont une section de diamètre moins important que celui des chambres 240, les billes des clapets étant insérées dans les chambres 240 via les deuxièmes canaux 245 par déformation locale de la mousse du corps 201.

Les chambres 240 et les canaux associés sont donc régulièrement répartis dans toute la portion inférieure du corps 201. La direction générale de chaque chambre et de ses deux canaux associés s'étend donc parallèlement à la direction Z.

Ainsi un chemin d'aspiration est ménagé à travers le corps 201. Dans le cas présent, ce chemin d'aspiration est défini en partie haute par successivement le deuxième logement 210 et le quatrième logement 217 et en partie basse par successivement les premiers canaux 244, les chambres 240 et les deuxièmes canaux 245.

Le chemin d'aspiration s'étend rectilignement selon la direction Z en étant centré dans sa portion haute dans le corps 201 selon les directions X et Y.

Ledit chemin d'aspiration présente donc ici un seul passage en portion haute présentant des sections différentes (selon le plan de section parallèle au plan contenant les directions X et Y) à différentes hauteurs considérées dudit chemin avec une section qui se rétrécit à mesure que l'on se rapproche de la face supérieure 202 du corps 201. Par ailleurs, le chemin d'aspiration présente une pluralité de passages en partie basse comprenant en outre des clapets.

De manière correspondante, l'interface de fixation 207 comporte un trou d'aspiration 220 s'étendant ainsi entre les deux faces principales 208, 209 de l'interface de fixation 207 de sorte à déboucher à une première extrémité dans la face inférieure 209 au niveau de la séparation entre les deux pièces 235, 236 du cadre 216 et à une deuxième extrémité dans la face supérieure 208 au niveau de l'entrée du bloc d'aspiration 204.

Quant à l'insert 231, il est conformé de sorte à ne pas gêner la circulation de l'air à travers les chambres 240 et les canaux 244, 245. Le contour interne et externe de l'insert 231 présente donc ici des circonvolutions pour contourner lesdites chambres et canaux.

On a ainsi décrit une tête de préhension simple de structure dont le châssis est entièrement en mousse.

De la sorte, le chemin d'aspiration à travers le châssis est uniquement défini par ledit corps 201 et n'est donc séparé de l'extérieur que par ledit corps 201. L'air est en outre aspiré directement à travers la mousse du corps 201 pour la partie du chemin d'aspiration s'étendant entre la face inférieure 203 du corps 201 jusque dans le fond du deuxième logement 210 c'est-à-dire que seule la mousse du corps 201 sépare alors l'air aspiré à travers la tête de l'air extérieur à la tête (l'air étant en effet ensuite aspiré à travers l'interface de fixation 207).

La tête de préhension ainsi décrite s'avère donc de masse réduite par rapport aux dispositifs de l'art antérieur. Avantageusement une telle tête de préhension permet de limiter un risque de blessure de l'utilisateur grâce au corps en mousse.

Ainsi, l'utilisation d'une mousse comme élément structurant de la tête de préhension permet d'obtenir une tête de préhension compacte tout en protégeant l'utilisateur en cas de collision.

Dans le mode de réalisation décrit, le cadre 216, l'insert 231 et les cales 237, 238 et l'interface de fixation 207 permettent de rigidifier la tête de préhension tout en étant internes à ladite tête. En effet, ces différents éléments permettent ainsi de limiter la déformation du corps 201 tout en permettant de conserver une tête de préhension légère et peu dangereuse en cas de collision.

En outre, ladite tête comporte un compartiment de clapets, dont les chambres 240 sont directement ménagées dans le corps 201 en mousse. Ceci permet d'avoir une tête à clapets simple de structure. En outre l'utilisation du corps 201 comme chambres 240 pour les clapets permet d'améliorer l'étanchéité de l'ensemble grâce à la rétraction locale de la mousse autour de la bille lors de la mise sous vide.

Ceci permet par ailleurs d'alléger la masse de la tête vis-à-vis des premiers et deuxièmes modes de réalisation.

Bien entendu, l'invention n'est pas limitée aux modes de réalisation décrits ci-dessus et on pourra y apporter des variantes de réalisation sans sortir du cadre de l'invention.

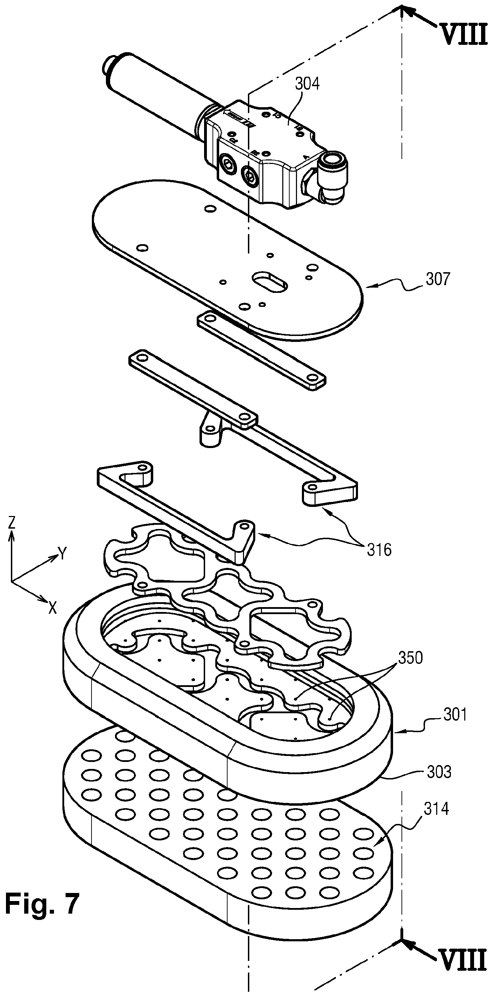

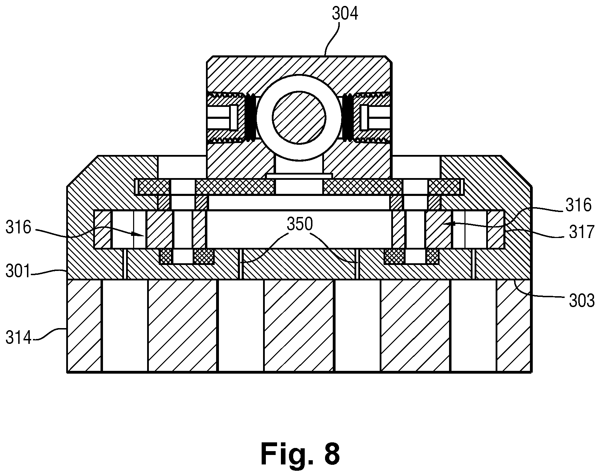

En particulier, on pourra bien entendu mixer les différents modes de réalisations décrits entre eux. Par exemple en référence aux figures 7 et 8, et selon un quatrième mode de réalisation, on pourra ainsi avoir une tête de préhension identique à celle du troisième mode de réalisation à la différence que ladite tête ne comportera pas de compartiment à clapets. Ainsi en place des canaux et des chambres, des trous calibrés 350 (dont une partie seulement est référencée ici) seront ménagés dans la portion basse du corps 301 de sorte à déboucher à une première extrémité dans le fond du quatrième logement 317 recevant le cadre 316 et à une deuxième extrémité dans la face inférieure 303 du corps 301. Chaque trou calibré 350 s'étendra dans le prolongement de l'une des alvéoles de la semelle 314, les trous calibrés 350 seront d'un diamètre bien moins important que celui des alvéoles. Selon une variante, le corps 301 pourra ne pas présenter de tels trous calibrés mais une plaque comprenant elle-même de tels trous calibrés comme dans le premier mode de réalisation ou le deuxième mode de réalisation. Ladite plaque pourra alors être en complément ou en remplacement de l'insert.

Dans le troisième mode de réalisation comme dans le quatrième mode de réalisation, le corps en mousse joue ainsi également le rôle d'alimentation individuelle de chaque alvéole de la semelle contrairement aux premier et deuxième modes où ce rôle était tenu par la plaque.

En outre, ladite tête comporte un compartiment de clapets, dont les chambres 240 sont directement ménagées dans le corps 201 en mousse. Ceci permet d'avoir une tête à clapets simple de structure. En outre l'utilisation du corps 201 comme chambres 240 pour les clapets permet d'améliorer l'étanchéité de l'ensemble grâce à la rétraction locale de la mousse autour de la bille lors de la mise sous vide.

D'autres combinaisons de modes de réalisation sont envisageables comme agencer un cadre dans la tête du premier mode de réalisation ; ne pas agencer de cadre dans le deuxième/troisième/quatrième mode de réalisation mais par exemple les entretoises du premier mode de réalisation ; conformer le corps en mousse du premier/deuxième/quatrième mode pour qu'il forme un compartiment à clapets comme dans le troisième mode ... ; remplacer la plaque par l'insert et inversement (l'insert pourra ainsi être en contact avec la semelle et/ou la plaque agencée à l'intérieur du corps sans être en contact avec la semelle) ; les corps du premier/deuxième mode de réalisation pourront prendre une forme oblongue comme dans le troisième/quatrième mode de réalisation et inversement. Le générateur de vide pourra faire partie ou non de la tête de préhension. Ainsi, le bloc d'aspiration pourra ne pas comporter lui-même de générateur de vide mais être raccordé à un générateur de vide déporté de la tête de préhension. Cela permettra d'augmenter la capacité de la tête de préhension tout en conservant une masse de tête de préhension relativement faible. La tête de préhension pourra ne pas comporter de bloc d'aspiration mais uniquement un orifice de sortie par l'intermédiaire duquel un bloc d'aspiration déporté et/ou un générateur de vide déporté sera raccordé.

Par ailleurs, bien qu'ici la tête de préhension soit une tête de préhension surfacique, la tête pourra être une tête de préhension ponctuelle c'est-à-dire ne présentant qu'une seule alvéole.

Par ailleurs bien qu'ici le générateur de vide soit un générateur de vide par effet Venturi, on pourra employer tout autre type de générateur de vide tel que par exemple une turbine ou une pompe.

L'interface de fixation pourra être fixée au châssis sans être agencé en partie ou en totalité à l'intérieur du corps en mousse.

On pourra s'affranchir d'une interface de fixation et/ou d'une plaque de fixation de la semelle au châssis.

La plaque pourra être agencée en partie ou en totalité à l'intérieur du corps en mousse ou pourra être agencée entièrement à l'extérieur de la mousse. La plaque pourra ne pas comprendre de trou calibré et être ainsi un simple élément de rigidification du châssis. En complément ou en remplacement de la plaque, la tête pourra incorporer un autre organe de fixation de la semelle au châssis, tel qu'un compartiment de clapets, ou pourra se passer d'un tel organe de fixation, la semelle étant alors directement fixée au corps en mousse de la chambre comme dans le troisième et le quatrième mode de réalisation.

Par ailleurs, la mousse du corps et celle de la semelle pourront être différentes ou identiques. La tête de préhension pourra s'affranchir d'une semelle. La semelle pourra ne pas recouvrir toute la face inférieure du corps en mousse mais seulement une partie.

Bien qu'ici le corps en mousse soit d'une seule pièce, ledit corps pourra être composé de plusieurs blocs de mousse solidarisés entre eux par exemple par collage, par éléments de fixation de type vis ... Les blocs de mousse pourront être assemblés entre eux verticalement, horizontalement ou selon d'autres directions.

De la même manière, bien qu'ici la semelle soit d'une seule pièce, la semelle pourra être composé de plusieurs blocs de mousse solidarisés entre eux par exemple par collage, par éléments de fixation de type vis ... Les blocs de mousse pourront être assemblés entre eux verticalement, horizontalement ou selon d'autres directions.

Par ailleurs, bien qu'ici le corps en mousse et la semelle soient distincts, le corps en mousse et la semelle pourront être d'une seule pièce : on pourra ainsi réaliser les alvéoles directement dans la portion basse du corps en mousse (le corps en mousse comprenant en outre des chambres à clapets ou étant dépourvu de telles chambres). Si le corps en mousse est conformé de sorte à présenter des clapets ils pourront être agencés différemment de ce qui a été indiqué par exemple de sorte à former un serpentin pour une fermeture en cascade desdits clapets. De même le cadre ou tout autre élément de rigidification pourra être agencé différemment de ce qui a été indiqué par exemple de sorte à former un serpentin pour une fermeture en cascades des clapets.

Le châssis et en particulier le corps en mousse pourra être fixé à d'autres pièces de la tête de préhension par exemple par adhésif ou tout autres moyens.

Le corps en mousse pourra prendre une autre forme que celle décrite. Le corps en mousse pourra par exemple englober au moins un raccordement du bloc d'aspiration à un système de préhension générale ; un module d'atténuation sonore ... Le corps en mousse pourra être conformé pour recouvrir également le dessus du bloc d'aspiration ou bien le dessus de l'interface de fixation.

Bien qu'ici la tête de préhension comporte toujours plusieurs éléments de rigidification (que sont la plaque, l'interface de fixation, les entretoises, le cadre, l'insert, les cales ...), on pourra envisager que la tête de préhension comporte un nombre différent d'éléments de rigidification et par exemple un seul élément.

La tête de préhension pourra ainsi ne pas comporter de plaque et/ou d'interface de fixation et/ou d'entretoise et/ou de cadre et/ou d'insert et/ou de cales .... De préférence la tête de préhension comportera au moins un élément de rigidification agencé dans le corps en mousse dans une zone sujette aux déformations et de préférence au moins dans la zone la plus sujette aux déformations.

La ou les éléments de rigidification seront intégrés au corps de mousse, de préférence de sorte à ne pas en dépasser ou peu.

Par ailleurs bien qu'ici les différents éléments de rigidification soit en matière plastique (par exemple en PMMA ou tout autre matière plastique), un, plusieurs ou tous lesdits éléments pourront être dans un autre matériau et par exemple en matière métallique, en matériau composite (à base de fibres de carbone, de fibres de verre ...) ... On privilégiera les matières légères et rigides.

La mousse du corps en mousse pourra être à base de/ ou en Polyéthylène (PE), Ethylène-Acétate de vinyle (EVA), Polyuréthane (PU), polyester, élastomère (par exemple à base de/ou en caoutchouc), polymère ... ou tout autre matériau ayant de préférence une structure cellulaire (à cellules fermées, semi-ouvertes, ouvertes ...) et de préférence une structure cellulaire à cellules fermées.

En outre, si la tête de préhension comporte au moins un élément de rigidification, celui-ci pourra être différent de ce qui a été indiqué. Par exemple, en place d'une entretoise (soit une pièce tubulaire) on pourra employer toute autre pièce rigide reliant deux autres éléments de rigidification dans la tête de préhension et en les maintenant dans un écartement fixe. Par exemple le cadre lui-même pourra former entretoise s'il est d'une hauteur suffisante pour pouvoir être fixé d'une part à la plaque et d'autre part à l'interface de fixation. On pourra avoir recours aussi à au moins un pion de rigidification et/ou au moins une tige de rigidification et/ou au moins un montant vertical de rigidification ... La tête pourra ainsi comporter un ou des montants verticaux fixés sur une ou des faces de la plaque. La plaque et/ou l'insert et/ou le cadre ... pourra directement intégrer un ou des montants verticaux de sorte à prendre la forme d'un bac à montants verticaux.

L'interface de fixation et/ou son logement pourront être différent de ce qui a été décrit. Par exemple, le logement pourra ne pas comprendre de languette (l'interface comprendra alors soit aucune rainure soit une rainure dans laquelle le corps en mousse viendra se loger naturellement en cas de dépression). Le logement pour la réception de l'interface de fixation pourra ne pas être conformé en une gorge de réception de l'interface de fixation.

La plaque et/ou son logement pourront prendre une autre forme que celle décrite. Par exemple bien qu'ici la plaque soit pleine (mise à part au niveau des trous calibrés), ladite plaque pourra être usinée avec une ou plusieurs ouvertures pour en réduire la masse. La plaque pourra également être dépourvue de trous calibrés.

De même le cadre et/ou son logement pourront être différent de ce qui a été décrit. Par exemple le cadre pourra ne pas être entièrement évidé en son centre et comprendre au moins une structure centrale pour rigidifier davantage la tête de préhension. Par exemple le cadre pourra ne pas former tout un contour interne du corps en mousse.

Comme déjà indiqué le cadre pourra être composé de plusieurs pièces qui seront ou non assemblées en partie ou en totalité entre elles ou être d'une seule pièce. La ou les pièces pourront avoir une autre forme que celle décrite et par exemple se présenter sous la forme de montants verticaux ou bien encore former un contour fermé longeant les différents côtés latéraux du corps.

De même les cales pourront avoir une autre forme que celle décrite. Les cales pourront être d'une seule pièce avec le cadre.

Bien qu'ici le cadre et/ou les entretoises et/ou les cales soient des pièces distinctes de l'interface de fixation et/ou de la plaque et/ou de l'insert, on pourra envisager que le cadre et/ou au moins l'une des entretoises et/ou au moins l'une des cales soit d'une seule pièce avec l'interface de fixation et/ou la plaque et/ou l'insert. Ceci permettra de réduire le nombre de pièces dans la tête de préhension et/ou de faciliter le montage de ladite tête et/ou de réduire la masse de ladite tête et/ou d'ajouter des renforts rigidifiant l'ensemble dans des zones données.

## Revendications

1. Tête de préhension par aspiration comprenant au moins un châssis et une semelle (14, 111, 214, 314) destinée à venir reposer contre un produit à soulever, la semelle étant agencée en partie basse du châssis, la tête comportant un corps en mousse (1, 101, 201, 301) dans lequel est ménagé un chemin d'aspiration entre la semelle et un orifice de sortie de la tête de préhension destiné à être raccordé à un bloc d'aspiration, le corps en mousse formant ainsi seul, sur au moins une partie du chemin, la séparation entre un air aspiré à travers ledit chemin et l'extérieur de la tête de préhension de sorte que l'air aspiré soit directement en contact avec la mousse du corps en mousse, **caractérisé en ce que** la tête comporte au moins un élément de rigidification agencé au moins en partie à l'intérieur du corps en mousse (1, 101, 201, 301).

2. Tête selon la revendication 1, comprenant un bloc d'aspiration raccordé à l'orifice de sortie, l'élément de rigidification étant une interface de fixation (5, 107, 207) du bloc d'aspiration au corps en mousse.

3. Tête selon la revendication 2, comprenant un logement ménagé dans le corps en mousse pour la réception de l'interface de fixation, l'interface de fixation (5, 107, 207) ou le logement comprenant une gorge de réception de respectivement une portion du logement ou de l'interface de fixation.

4. Tête selon l'une des revendications 1 à 3, dans laquelle l'élément de rigidification est une plaque (18, 112) ou un insert (231) agencée en partie basse du châssis.

5. Tête selon l'une des revendications 1 à 4, dans lequel l'élément de rigidification est un cadre (116, 216, 316).

6. Tête selon la revendication 5, dans lequel le cadre (216, 316) est composé de plusieurs pièces distinctes.

7. Tête selon l'une des revendications 1 à 6 dans laquelle le cadre (116) forme un contour fermé.

8. Tête selon l'une des revendications 1 à 7, dont au moins l'un des éléments de rigidification est une entretoise (23) ou joue le rôle d'une entretoise en étant fixé à chacune de ses extrémités à deux autres éléments de rigidification.

9. Tête selon l'une des revendications précédentes, comprenant un bloc d'aspiration raccordé à l'orifice de sortie, le bloc d'aspiration (104, 204) étant agencé au moins en partie à l'intérieur du corps en mousse.

10. Tête selon l'une des revendications précédentes, dans laquelle la tête est une tête de préhension surfacique.

11. Tête selon l'une des revendications précédentes, dans laquelle un bloc d'aspiration et/ou un module d'atténuation sonore est agencé au moins en partie à l'intérieur du corps en mousse.

12. Tête selon l'une des revendications précédentes dans laquelle la semelle (214, 314) est directement fixée, au moins en partie, à une face inférieure du corps en mousse.

13. Tête selon l'une des revendications précédentes, dans lequel le corps en mousse (201, 301) est conformé de sorte que le chemin d'aspiration se divise dans sa partie basse en une pluralité de canaux avec ou sans bille et/ou de trous calibrés débouchant respectivement à l'aplomb de l'une des alvéoles de la semelle.

14. Système de préhension comprenant une structure porteuse et une tête selon l'une des revendications précédentes.

## Patentansprüche

1. Sauggreifkopf, umfassend zumindest ein Chassis und eine Saugplatte (14, 111, 214, 314), die dazu bestimmt ist, an einem zu hebenden Produkt zur Anlage gebracht zu werden, wobei die Saugplatte im unteren Teil des Chassis angeordnet ist, wobei der Kopf einen Schaumstoffkörper (1, 101, 201, 301) enthält, in welchem ein Ansaugweg zwischen der Saugplatte und einer Austrittsöffnung des Greifkopfs ausgebildet ist, welche dafür bestimmt ist, an einen Saugblock angeschlossen zu werden, wobei entlang zumindest eines Teils des Weges die Trennung zwischen der durch den Weg hindurch angesaugten Luft und der Außenseite des Greifkopfs allein von dem Schaumstoffkörper gebildet wird, sodass die Ansaugluft in direktem Kontakt mit dem Schaumstoff des Schaumstoffkörpers steht, **dadurch gekennzeichnet, dass** der Kopf zumindest ein Versteifungselement enthält, das zumindest teilweise im Inneren des Schaumstoffkörpers (1, 101, 201, 301) angeordnet ist.

2. Kopf nach Anspruch 1, umfassend einen an die Austrittsöffnung angeschlossenen Saugblock, wobei es sich bei dem Versteifungselement um eine Befestigungsschnittstelle (5, 107, 207) zur Befestigung des Saugblocks an dem Schaumstoffkörper handelt.

3. Kopf nach Anspruch 2, umfassend eine in dem Schaumstoffkörper ausgebildete Aufnahme zum Aufnehmen der Befestigungsschnittstelle, wobei die Befestigungsschnittstelle (5, 107, 207) oder die Aufnahme eine Aufnahmenut umfasst, die dazu dient, jeweils einen Abschnitt der Aufnahme oder der Befestigungsschnittstelle aufzunehmen.

4. Kopf nach einem der Ansprüche 1 bis 3, wobei es sich bei dem Versteifungselement um eine Platte (18, 112) oder einen Einsatz (231) handelt, die/der im unteren Teil des Chassis angeordnet ist.

5. Kopf nach einem der Ansprüche 1 bis 4, wobei es sich bei dem Versteifungselement um einen Rahmen (116, 216, 316) handelt.

6. Kopf nach Anspruch 5, wobei der Rahmen (216, 316) aus mehreren separaten Teilen besteht.

7. Kopf nach einem der Ansprüche 1 bis 6, wobei der Rahmen (116) eine geschlossene Kontur bildet.

8. Kopf nach einem der Ansprüche 1 bis 7, wobei es sich bei zumindest einem seiner Versteifungselemente um ein Zwischenstück (23) oder um ein als Zwischenstück dienendes Versteifungselement handelt, das an seinen Enden jeweils an zwei weiteren Versteifungselementen befestigt ist.

9. Kopf nach einem der vorhergehenden Ansprüche, umfassend einen an die Austrittsöffnung angeschlossenen Saugblock, wobei der Saugblock (104, 204) zumindest teilweise im Inneren des Schaumstoffkörpers angeordnet ist.

10. Kopf nach einem der vorhergehenden Ansprüche, wobei es sich bei dem Kopf um einen Flächengreifkopf handelt.

11. Kopf nach einem der vorhergehenden Ansprüche, wobei ein Saugblock und/oder ein Schalldämpfungsmodul zumindest teilweise im Inneren des Schaumstoffkörpers angeordnet ist.

12. Kopf nach einem der vorhergehenden Ansprüche, wobei die Saugplatte (214, 314) zumindest teilweise direkt an einer Unterseite des Schaumstoffkörpers befestigt ist.

13. Kopf nach einem der vorhergehenden Ansprüche, wobei der Schaumstoffkörper (201, 301) derart ausgebildet ist, dass sich der Ansaugweg in seinem unteren Abschnitt in eine Mehrzahl von Kugelkanälen oder kugellosen Kanälen und/oder in eine Mehrzahl von kalibrierten Öffnungen aufteilt, die jeweils senkrecht zu einer der Saugplattenzellen ausmünden.

14. Greifsystem, umfassend eine Tragstruktur und einen Kopf nach einem der vorhergehenden Ansprüche.

## Claims

1. A suction gripper head comprising at least one carrier and a soleplate (14, 111, 214, 314) for resting against an item to be lifted, the soleplate being arranged in the bottom portion of the carrier, the head comprising a foam body (1, 101, 201, 301) having a suction path arranged therein between the soleplate and an outlet orifice of the gripper head for connection to a suction block, the foam body thus acting on its own, over at least a portion of the path, to form the separation between air sucked through said path and the outside of the gripper head, such that the air that is being sucked comes directly into contact with the foam of the foam body, being **characterized in that** the gripper head comprises at least one stiffener element arranged at least in part inside the foam body (1, 101, 201, 301).

2. A head according to claim 1, including a suction block connected to the outlet orifice, the stiffener element being a fastener interface (5, 107, 207) for fastening the suction block to the foam body.

3. A head according to claim 2, including a housing arranged in the foam body to receive the fastener interface, the fastener interface (5, 107, 207) or the housing including a groove for receiving respectively a portion of the housing or a portion of the fastener interface.

4. A head according to any one of claims 1 to 3, wherein the stiffener element is a plate (18, 112) or an insert (231) arranged in the bottom portion of the carrier.

5. A head according to any one of claims 1 to 4, wherein the stiffener element is a frame (116, 216, 316).

6. A head according to claim 5, wherein the frame (216, 316) is made up of a plurality of distinct parts.

7. A head according to any one of claims 1 to 6 wherein the frame (116) forms a closed outline.

8. A head according to any one of claims 1 to 7, in which at least one of the stiffener elements is a spacer (23) or acts as a spacer, being fastened at each of its ends to two other stiffener elements.

9. A head according to any preceding claim, including a suction block connected to the outlet orifice, the suction block (104, 204) being arranged at least in part inside the foam body.

10. A head according to any preceding claim, wherein the head is an area gripper head.

11. A head according to any preceding claim, wherein a suction block and/or a sound attenuation module is/are arranged at least in part inside the foam body.

12. A head according to any preceding claim, wherein the soleplate (214, 314) is fastened, at least in part, directly to a bottom face of the foam body.

13. A head according to any preceding claim, wherein the foam body (201, 301) is shaped in such a manner that the suction path is subdivided in its bottom portion into a plurality of channels with or without balls and/or calibrated holes opening out in register with respective ones of the cells of the soleplate.

14. A gripper system comprising a gripper structure and a gripper head according to any preceding claim.
